# EUROPÄISCHE PATENTANMELDUNG

(11) **EP 3 587 299 A1**
(43) Veröffentlichungstag der Anmeldung: **01.01.2020**
(21) Anmeldenummer: 19177802.6
(22) Anmeldetag: 03.06.2019
(51) Int. Cl.: B65D 81/32, C08K 3/34, C09J 4/00, C08F 222/32

(54) **MEHRKOMPONENTIGE KLEBSTOFFSYSTEME UND DEREN VERWENDUNG**

(30) Priorität: 21.06.2018 DE 102018114995; 13.05.2019 DE 102019112375
(71) Anmelder: fischerwerke GmbH & Co. KG, 72178 Waldachtal (DE)
(72) Erfinder: Dienst, Jan, 79369 Wyhl am Kaiserstuhl (DE); Zimmerlin, Jens, 79359 Riegel (DE)
(74) Vertreter: Suchy, Ulrich Johannes

(57) **Zusammenfassung**

Ein- oder mehr-, insbesondere zweikomponentiges, Klebstoffsystem für Befestigungszwecke und/oder für Reparaturzwecke mit einer mindestens ein oder mehrere Cyanoacrylate enthaltenden Komponente und gegebenenfalls einer anderen einen heterogenen Härtungskatalysator beinhaltenden Komponente in einem Folienbeutel und dessen Verwendung zum Festkleben oder Verkleben von Gegenständen.

## Beschreibung

Die Erfindung betrifft ein mehr-, insbesondere zweikomponentiges, Klebstoffsystem (vor allem für Endverbraucher) für Befestigungszwecke und/oder für Reparaturzwecke, insbesondere zum Festkleben oder Verkleben von Gegenständen im Endverbraucher (wie Heimwerker)-Bereich, wie Schwimmbad-, Zimmer-, Badezimmer- und/oder Küchenaccessoires oder Adapterelementen zur Aufnahme dieser Accessoires, an (saugfähige und nicht-saugfähige) Substrate, oder zum Verkleben von Gegenständen aneinander für Reparaturzwecke vor Ort (insbesondere ohne Notwendigkeit von Fachpersonen, d.h. für den einfachen Anwender), beispielsweise in Bereichen wie Outdoor (Wanderutensilien, Kletterutensilien), Landfahrzeuge wie Motorrad oder Auto (einschließlich Wohnmobil), Wasserfahrzeuge, Luftfahrzeuge, Camping oder dergleichen insbesondere unter Verkleben von zwei Materialien mit saugenden und/oder nichtsaugenden aneinander zu befestigenden Oberflächen, sowie dessen Verwendung zu den genannten Zwecken, und weitere unten dargelegte Erfindungsverkörperungen. Die Erfindung betrifft ferner auch ein einkomponentiges Klebstoffsystem und dessen Verwendung

Es gab in der Vergangenheit verschiedene Anstrengungen, zwei (insbesondere nichtsaugfähige) Substrate in akzeptabler Zeit miteinander zu verkleben, mit der zusätzlichen Aufgabenstellung, dass die Verklebung unter geeigneten Bedingungen wieder lösbar und rückstandsfrei wieder entfernbar sein sollte. 2-Komponentenkleber sind für gewöhnlich zu hart, zu hochmodulig und nicht ohne Beschädigung der Substrate (und/oder befestigter Gegenstände) lösbar. Was 1-Komponentenkleber angeht (die regelmäßig durch Luftfeuchtigkeit härten), wurde versucht, 1K-Klebstoffe der genannten Nutzung zuzuführen, indem man z.b. befeuchtete Baumwollfasern einrührte oder eine zu befestigende Adapterplatte gesintert ausführte, um sie für Luftfeuchtigkeit durchlässig zu machen (Fa. nie wieder Bohren, siehe https://www.niewiederbohren.com/). Diese Varianten sind aufwändig und teuer und erfordern spezielles Zubehör.

Unter dem Namen "Double Bubble"® vertreibt LOCTITE ein ZweiKomponenten-Epoxidharz-Klebstoffsystem, bei dem die Komponenten (Epoxidharz bzw. Härter) auf zwei Kammern eines Folienbeutels verteilt sind, die parallel angeordnet sind, und deren Inhalt durch gleichzeitiges Aufschneiden von außen mittels einer Schere zugänglich wird, wobei die Komponenten anschließend (z.B. in einem Gefäß) mittels eines Rührspatels gemischt und dann das resultierende rasch aushärtende Gemisch zum Kleben verwendet werden kann (siehe z.B. https://www.youtube.com/watch?v=xWxChOAD1Fo).

Alternativ wäre denkbar, geeignete 2K-Klebstoffe auf Polyurethan(PU)-Basis zu entwickeln. Hier wäre jedoch als nachteilig anzusehen, dass von ihnen wegen des Gehaltes an niedermolekularen (in erster Linie monomeren) Isocyanaten eine gesundheitliche Gefahr für den Anwender ausgeht, und es besteht eine Notwendigkeit zur Kennzeichnung gemäß CLP-Verordnung.

Bekannt ist die Verwendung von Cyanacrylaten, beispielsweise in Sekundenklebern, wobei diese oft als einkomponentige, in Gegenwart von Spuren von nukleophilen Spezies wie Hydroxidionen in Wasser, Hydroxylgruppen auf den Oberflächen der Substrate oder basischen Oxiden rasch polymerisierende Verbindungen in Form von dünnen Filmen zwischen zu verklebenden Substraten aufgebracht werden und die Substrate durch Zusammenpressen miteinander verklebt werden.

WO 2015/059644 A1 beschreibt bestimmte zweikomponentige Cyanacrylatsysteme, die in Form von Zweikammer-Spritzen oder - Kartuschen angewendet werden. Diese Systeme erlauben auch die Anwendung in dickschichtigeren (voluminösen) Mengen, beispielsweise zum Zwecke der Füllung von Vertiefungen, Rissen oder Löchern in einem Substrat oder zwischen Substraten. WO 2016/174529 A1 zeigt, dass für derartige Zwei-Spritzen-Systeme aufwändige Klarsichtverpackungen nötig sind, um zu vermeiden, dass durch das hochvolatile Cyanacrylat eine Trübung der durchsichtigen Kunststoffmaterialien auftritt. Auch ergeben sich bei derartigen Systemen, die einen Statikmischer erfordern, Probleme, wenn nicht alles in den Spritzen (Kartuschenkompartimenten) enthaltene Material ausgedrückt wird, da dann die Statikmischer ersetzt werden müssen, bevor eine weitere Verwendung noch zurückgebliebenen Klebematerials zu einem späteren Zeitpunkt möglich ist.

Vor diesem Hintergrund besteht die Aufgabe, die genannten Nachteile zu vermeiden und insbesondere ein gut handhabbares, (mindestens was die polymerisierenden Komponenten angeht) kennzeichnungsfreies, schnell aushärtendes Klebstoffsystem mit einem Klebstoff mit hoher Haltekraft insbesondere zum Verbinden zweier Materialien (insbesondere Gegenstände, was vor- und nachstehend auch feststehende Substrate wie Mauern oder Kacheln an Wänden beinhaltet) mit der Maßgabe, dass die Verbindung gewünschtenfalls wieder lösbar ist und vorzugsweise der Klebstoff rückstandsfrei entfernt werden kann, ohne die verklebten Materialien (z.B. Fliesen oder Kacheln in Bad oder Küche) zu zerstören, bereitzustellen. Insbesondere besteht ein Bedarf an vor allem für Endverbraucher einfach zu handhabenden Klebstoffsystemen zur chemischen Befestigung bzw. zum Verkleben, also für Befestigungszwecke und/oder Reparaturzwecke, insbesondere durch Heimwerker oder andere Endverbraucher als Nutzer, wie beispielsweise zum Festkleben von Schwimmbad-, Zimmer- oder insbesondere Badezimmer- oder Küchenaccessoires oder Adapterelementen zur Aufnahme dieser Accessoires, wie Haken, Behältern für Seife (z.B. Seifenschalen), Behälter für Kosmetika oder flüssige Shampoos oder Waschflüssigkeiten, Spiegelhaltern, Haltern für elektrische Geräte wie Haartrockner, Rasierer, elektrische Bürsten oder elektrische Zahnbürsten, (z.B. Zahnputz-) Becherhaltern, Flaschenhaltern, Handtuchhaltern, Haltegriffen oder dergleichen mehr, um einen festen Halt direkt auf (beispielweise verfliesten oder gekachelten) Wänden, Böden oder Decken oder anderen Raumelementen, oder für Reparaturzwecke in diversen Bereichen wie oben genannt (wobei die zu verklebenden Oberflächen vorzugsweise jeweils saugfähige und/oder nichtsaugfähige Materialien aufweisen) zu ermöglichen, bei guter Anhaftung und mit hohen Zugfestigkeiten, vorzugsweise mit im Bedarfsfall guter und rückstandsfreier Ablösbarkeit. Der Nachteil der Trübung von Klarsichtverpackungen durch hochvolatiles Cyanacrylat soll vermieden werden.

Diese Systeme müssen eine rasche Aushärtung bei Anwendung und gleichzeitig einfache Anwendbarkeit in geeigneter Portionierung und nicht nur filmartiger Schichtdicke ermöglichen.

Es wurde nun gefunden, dass mehr-, insbesondere zweikomponentige Klebstoffsysteme mit einer Komponente (Kunstharzkomponente) auf der Basis von als erster Komponente einer solchen, die Cyancrylate beinhaltet, und als zweiter Komponente einer solchen, die einen heterogenen Härtungskatalysatoren beinhaltet, die in Folienbeuteln (Sachets) mit zwei (oder ferner mehr) Kammern vor der Anwendung getrennt vorliegen, besonders geeignet sind, insbesondere für den Endverbraucheranwendungen für Befestigungszwecke und/oder Reparaturzwecke wie z.B. oben dargelegt. Durch die hermetische Einschließung der Reaktionskomponenten in einem Folienbeutel werden die oben beschriebenen Probleme mit Klarsichtverpackungen vermieden.

Auch Cyanacrylat-Klebstoffsysteme mit nur einer Komponente, die in vor Ort anwendbaren Folienbeuteln (wie Sachets) enthalten ist (Aushärtung durch Luftfeuchtigkeit oder Wasserspuren auf den zu verbindenden Substraten und Gegenständen), sind hier geeignet und bilden somit eine Ausführungsform der Erfindung.

Die Erfindung betrifft somit in einer ersten Ausführungsform ein mehr-, insbesondere zweikomponentiges Klebstoffsystem (das durch Mischung einen Klebstoff ergeben kann oder ergibt) für Befestigungszwecke und/oder Reparaturzwecke, insbesondere im Endverbraucher (wie Heimwerker)-Bereich. beispielsweise für die "alltägliche" Anwendung im Heimwerker- oder Reparaturbereich, insbesondere wie vor- und nachstehend definiert) wie eingangs und nachfolgend näher definiert, beispielsweise zum Festkleben von Gegenständen an (immobilen oder mobilen) Substraten (insbesondere deren Oberflächen) mit vorzugsweise glatten, beispielsweise jeweils glasierten oder anderweitig glattflächigen, jedenfalls saugfähigen und/oder nichtsaugfähigen (zu verklebenden) Oberflächen, beispielsweise aus Kunststoff, Glas, Metall, Glasur, Beton, Mauerwerk, Anstrichen, Verputzen oder Keramik bestehenden oder damit beschichteten Materialien, insbesondere (vorzugsweise jeweils glasierten oder anderweitig glattflächigen) Fliesen, Kacheln, Metall-, Kunststoff- und/oder Keramikteilen (wie bei Badewanne, Bidet, Toilettenschüsseln, Pissoirs, Spiegeln, Kunststoffschränken oder -wandschränken, Becken von Schwimmbädern oder Waschbecken), oder zum Verkleben von Gegenständen miteinander (die saugfähige und/oder nichtsaugfähige Substrate aufweisen können), insbesondere in Bereichen wie Outdoor (Wanderutensilien, Kletterutensilien), Landfahrzeuge wie Motorrad oder Auto (einschließlich Wohnmobil), Wasserfahrzeuge, Luftfahrzeuge, Camping oder dergleichen, welches in Form eines Kits als Folienbeutel mit mehreren, insbesondere zwei, Kammern in Form von zwei oder mehr miteinander (insbesondere als ein Folienbeutel (wie Sachet) mit ein oder mehreren Trennwänden zwischen den Kammern) im Folienbeutel vorhandenen folienumhüllten Kammern, welche jeweils eine reaktionshindernd getrennte Aufbewahrung der sonst bei Mischung miteinander reagierenden Komponenten, von denen mindestens eine ein oder mehrere Cyanacrylate beinhaltet, mindestens eine andere einen heterogenen Härtungsinitiator, ermöglichen oder gewährleisten, wobei der Folienbeutel die folienumhüllten Kammern ausformt und wobei der Inhalt (die Komponenten) von zwei oder mehr miteinander zu einem Folienbeutel verbundenen folienumhüllten Kammern durch Zerstörung einer inneren Sollbruchstelle (insbesondere als erst durch Druck auf den Folienbeutel, z.B. durch dessen manuelles Aufrollen, durchströmbarer Verschlussbereich ausgebildet) zwischen den folienumhüllten Kammern unter Vereinigung der Innenräume der folienumhüllten Kammern miteinander im Anwendungsfall innerhalb des die folienumhüllten Kammern bildenden Folienbeutels gemischt werden kann bzw. im Anwendungsfall gemischt wird.

Eine weitere Ausführungsform der Erfindung betrifft ein einkomponentiges Klebstoffsystem mit Cyanacrylat als polymerisierbarem Bestandteil, das in einem einkammerigen Folienbeutel untergebracht ist.

Durch die Verwendung in einem Folienbeutel sind das zwei- oder mehr- und das einkomponentige erfindungsgemäße Klebstoffsystem besonders einfach zu handhaben, für den einmaligen Gebrauch geeignet, gut (da portionsweise konfektioniert) lagerbar, es gibt (anders als bei Spritzensystemen) keine angebrochenen Packungen, die sicher und gut verschlossen aufbewahrt werden müssen, und der Folienbeutel kann auch wie eine Art weicher Spatel zum gleichmäßigen Auftragen des Klebers auf zu verklebende Flächen verwendet werden.

Die Erfindung betrifft auch die Verwendung eines vor- und nachstehend definierten zwei- oder mehr- oder ferner einkomponentigen Klebstoffsystems zum Festkleben oder Verkleben von Gegenständen wie vor- und nachstehend definiert, insbesondere aus nichtsaugenden Materialien, auf der jeweiligen Oberfläche eines Substrates und/oder Gegenstandes. Die besondere Eignung zur schnellen Verklebung nichtsaugfähiger Substrate und/oder Gegenstände schließt eine Eignung zur Verklebung saugfähiger Gegenstände und/oder Substrate mit einem erfindungsgemäßen Klebstoffsystem nicht aus, wie auch die Verklebung von saugfähigen mit nichtsaugfähigen Materialien. Auch ein diese Verwendung beinhaltendes Verfahren zum Festkleben oder Verkleben von Gegenständen ist ein Erfindungsgegenstand.

Im Rahmen der Verwendung oder des Verfahrens werden die Komponenten eines erfindungsgemäßen zwei- oder mehrkomponentigen Klebstoffsystems entweder vorzugsweise durch Öffnen der inneren Sollbruchstelle des Folienbeutels, insbesondere durch Drücken auf den Folienbeutel und/oder Aufrollen des Folienbeutels und Walken, miteinander in Kontakt gebracht und unter (quasi massierendem) Drücken (Walken) des Folienbeutels miteinander vermischt und anschließend durch Öffnen eines zu öffnenden Bereiches des Folienbeutels, insbesondere in Form einer weiteren Sollbruchstelle, nach außen geleitet und so in oder vorzugsweise auf mindestens eines der jeweils zu verklebenden Materialien aufgebracht (vorzugsweise nach Reinigen der jeweiligen Oberflächen, beispielsweise durch Abwischen, Abwaschen mit einem entfettenden Mittel oder Kombinationen davon). Die zu verklebenden Materialien werden zum Verkleben über den aufgebrachten Kleber miteinander in Kontakt gebracht, wobei vorzugsweise der Folienbeutel nach oder während dem Ausdrücken des reagierenden Gemisches zum (insbesondere gleichmäßigen) Verteilen des härtenden Klebers verwendet werden kann.

Im Rahmen der Verwendung eines erfindungsgemäßen einkomponentigen Klebstoffsystems wird durch Öffnen eines zu öffnenden Bereiches eines einkammerigen Folienbeutels, der einen Cyanacrylatklebstoff enthält, und Drücken des Folienbeutels der Klebstoff auf zu verklebende Oberflächen der aneinander zu befestigenden Materialien (Gegenstände und/oder Substrate) aufgebracht, was durch Verteilen mittels des (so als eine Art Spachtel eingesetzten) Folienbeutels erleichtert werden kann. Die Aushärtung erfolgt dann durch Reaktion mit Spuren von nukleophilen Spezies wie Hydroxidionen in Wasser, Hydroxylgruppen auf den Oberflächen der Materialien oder dort vorhandenen basischen Oxiden.

Bei der Verwendung oder den Verfahren können die zu verklebenden Oberflächen über die ganze gemeinsame Fläche oder auch nur bereichsweise mit der Mischung aus dem Klebstoffsystem beaufschlagt werden.

Die vor- und nachstehend genannten spezifischeren Definitionen einzelner, mehrerer oder aller Merkmale eines Erfindungsgegenstandes können zum Ersetzen spezifischerer Merkmale genutzt werden, was zu bevorzugten Erfindungsgegenständen (Erfindungsausführungsformen oder -varianten) führt, die ebenfalls Gegenstand der vorliegenden Erfindungsoffenbarung sind.

Als Gegenstände, die an Substrate festgeklebt werden können, sind insbesondere Schwimmbad-, Zimmer-, Badezimmer- (was Toilettenraum einschließt) und oder Küchenaccessoires oder Adapterelemente zur Aufnahme dieser Accessoires zu nennen, wie vor allem Haken (beispielsweise für Lappen), Behälter für Seife (z.B. Seifenschalen), Behälter für Kosmetika oder flüssige Shampoos oder Waschflüssigkeiten, Spiegelhalter, Halter für elektrische Geräte wie Haartrockner, Rasierer, elektrische Bürsten oder einfache (handbetriebene) oder elektrische Zahnbürsten, (z.B. Zahnputz-) Becherhalter, Flaschenhalter, Handtuchhalter, Haltegriffe oder dergleichen mehr zu nennen.

Als Substrate, an die (insbesondere an deren Oberflächen) derartige Gegenstände angeklebt werden können, sind insbesondere solche (insbesondere deren Oberflächen) mit vorzugsweise glatten, beispielsweise jeweils glasierten oder anderweitig glattflächigen, saugfähigen oder insbesondere nichtsaugfähigen (zu verklebenden) Oberflächen zu nennen, beispielsweise solche aus Kunststoff, Glas, Metall, Glasur, Beton, Mauerwerk, Anstrichen, Verputzen oder Keramik oder damit beschichteten Materialien, insbesondere (vorzugsweise jeweils glasierte oder anderweitig glattflächige) Fliesen, Kacheln, Metall-, Kunststoff- und/oder Keramikteile (wie bei Badewanne, Bidet, Toilettenschüsseln, Pissoirs, Spiegeln, Kunststoffschränken oder -wandschränken, Becken von Schwimmbädern, oder Waschbecken).

(Miteinander) zu verklebende Gegenstände können aus den bereits genannten oder beliebigen (vor allem harten, d.h. nur geringfügig verformbaren) Gegenständen, wie sie im Endverbraucherbereich miteinander verbunden werden sollen, beispielsweise in Bereichen wie Outdoor (Wanderutensilien, Kletterutensilien), Landfahrzeuge wie Motorrad oder Auto (einschließlich Wohnmobil), Wasserfahrzeuge, Luftfahrzeuge, Camping oder dergleichen ausgewählt sein.

Durch die einfache Transportierbarkeit der erfindungsgemäßen Klebstoffsysteme mit ihren Folienbeuteln, die auch eine gute Portionierbarkeit ermöglichen (Verwendung von einem oder mehreren Folienbeuteln) sind diese Klebstoffsysteme für den Endverbraucher sehr komfortabel.

Als saugfähige Materialien (hier und vor- und nachstehend als Oberbegriff für Gegenstände und Substrate verwendet) sind beispielsweise solche zu nennen wie poröses Mauerwerk, poröser Beton, gebrannter Ton, wie Ziegel, (vor allem weniger flexible) textile Materialien (wie Bezüge), Leder oder Holz oder dergleichen.

Unter saugfähig, wie saugfähigem Material, ist hierbei zu verstehen, dass ein diese Bedingung erfüllendes Material auf Grund seiner natürlichen/vorhandenen Porosität oder chemischen Zusammensetzung Wasser gespeichert hat, welches für eine Aushärtung (auch bei einem einkomponentigen Klebstoffsystem) direkt zur Verfügung steht und über die gesamte Substratfläche an die dünne Klebstoffschicht abgegeben wird. Dies bedingt eine (bei zwei- oder mehrkomponentigen Klebstoffsystemen ggf. schnellere) Aushärtung.

Daher können insbesondere bei solchen Substraten auch einkomponentige Cyanacrylatkleber in einem Einkammer-Folienbeutel zum Einsatz kommen.

Bei nichtsaugfähigen Materialien steht dagegen kein gespeichertes Wasser zur Verfügung, welches über die Klebeflächen abgegeben werden könnte. Ein Aushärtemechanismus, der über Feuchtigkeit reguliert ist, würde deshalb sehr lang dauern, da bei nichtsaugenden Substraten die Feuchtigkeitsaufnahme nur über die Stöße der Verklebung (und nicht über die Fläche) möglich ist. Die Diffusion verläuft entsprechend langsam und folglich auch die Aushärtung.

Gerade bei nichtsaugfähigen Substraten und deren somit nicht wassherspeichernden und zur Abgabe von Wasser befähigten Oberflächen besteht die Aufgabe, schnelle Verklebungen zu ermöglichen. Einkomponentige erfindungsgemäße Klebstoffsysteme härten jedoch durch Feuchtigkeitsaufnahme aus. Bei saugfähigen Oberflächen ist dies kein Problem, da diese zuvor meist genügend Wasser aufgenommen haben und dieses bei der Härtung wieder zur Verfügung stellen können. Anders ist dies bei nicht saugähigen Materialien. Daher sind erfindungsgemäße 2- oder mehrkomponentigen Klebstoffsysteme bei der Befestigung/Verklebung von nichtsaugfähigen Materialien besonders nützlich und damit vorteilhaft.

Als nichtsaugfähige Materialien sind beispielsweise solche zu nennen, wie (mindestens an der für das Verkleben vorgesehenen Oberfläche) glatte Materialien, die bei Benetzung oder Berührung mit Wasser (oder ferner den erfindungsgemäßen Klebstoffen) diese(s) nicht aufnehmen, wie Kunststoff, Glas, Metall, Glasuren, glatter Beton, Anstriche (wie Lacke), Keramik oder ferner porenfreies Mauerwerk oder (insbesondere lipophile) Verputze zu nennen.

Die Klebstoffe und ggf. ihre Komponenten (welche jeweils weitere Zusätze beinhalten können) sind vorzugsweise wie folgt definiert:

Die ein oder mehrere Cyanacrylate beinhaltende Komponente (nachfolgend Komponente A) beinhaltet vorzugsweise ein Cyanacrylat der Formel I 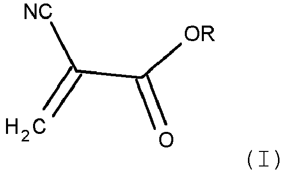 worin R ausgewählt ist aus der Gruppe bestehen aus einer linearen oder verzweigten C₁-C₁₆-Alkylgruppen, C₂-C₁₆-Alkoxyalkyl, C₃-C₁₆-Cyloalkyl, C₇-C₁₆-Aralkyl, C₆-C₁₆-Aryl, C₃-C₁₆-Allyl und C₁-C₁₆-Halogenalkyl, insbesondere wie in EP 3 071 638 definiert. Vorzugsweise is R Ethyl, C₂-C₁₆-Alkoxyalkyl, 2-Ethylhexyl oder eine Kombination von zwei oder mehr davon. Besonders bevorzugt als Cyanoacrylat ist Ethylcyanoacrylat.

Der Gehalt an Cyanoacrylat beträgt vorzugsweise 50 bis 99,9995 Gew.-% der Cyanoacrylat beinhaltenden Komponente (vorzugsweise als Komponente A bezeichnet).

Daneben können in der ein oder mehrere Cyanoacrylate beinhaltenden Komponente (insbesondere Komponente A) weitere Zusätze beinhaltet sein

Beispiele für in der ein oder mehrere Cyanoacrylaten beinhaltenden Komponente beinhaltete Zusätze können aus Verdickungsmitteln, wie Polymeren, z.B. Polymethylmethacrylat, thixotropen Agentien, wie hydrophobisiertem Siliciumdioxid, Beschleunigern, wie Kronenethern (z.B. 18 Crown 6), Antioxidantien, wie Methylen- bis(4-methyl-6-tert-butylphenol), Radikalstabilisatoren, wie 4-Methoxyphenol, und Stabilisatoren, wie Methansulfonsäure und Schwefeldioxid, oder Gemischen von zwei oder mehr davon ausgewählt sein. Beispiele für entsprechende Zusätze finden sich z.B. in EP 3 071 638 B1. Ihr Anteil kann jeweils bei 0,0005 bis 10 Gew.-% liegen, insgesamt bei 5 bis 20 (sollte das nicht bis 50 gehen, sonst kommen wir bei minimal 50 % Cyanacrylat nicht auf 100 %) Gew.-%, jeweils bezogen auf die Masse der Komponente (z.B. Komponente A).

Die weitere Komponente B enthält Substanzen, die geeignet sind, die Härtung der in Komponente A enthaltenen Cyanacrylate auszulösen, wie z.B. Wasser, Hydroxidionen, basische Komponenten.

Die einen heterogenen Härtungskatalysator beinhaltende Komponente (nachfolgend Komponente B) beinhaltet vorzugsweise ein hydratisiertes Calciumsilikat mit der chemischen Struktur von Xonotlit, dessen Partikel vorzugsweise sphärisch und mikroporös sind. Dies ist ein Silikat-Mineral mit zusätzlichen Hydroxidionen, die als Initiator für die Polymerisation von Cyanacrylaten dienen können. Es liegt in der den heterogenen Härtungskatalysator beinhaltenden Komponente (z.B. Komponente B) vorzugsweise in einem Anteil von 0,5 bis 15 Gew.-%, insbesondere von 1 bis 6 Gew.-%, vor. Zusätzlich beinhaltet die den Härtungskatalysator beinhaltende Komponente (z.B. Komponente B) insbesondere weitere Zusätze, vorzugsweise einen anionischen Initiator, wie eine organische Base in Form einer heterocyclischen Verbindung mit zwei kondensierten Ringen, z.B. Koffein, vorzugsweise bezogen auf die einen heterogenen Härtungskatalysator enthaltende Komponente (z.B. Komponente B) in einem Anteil von 0,05 bis 5 Gew.-%, insbesondere von 0,1 bis 0,6 Gew.-%, ein thixotropes Agens, wie hydrophobisiertes Siliciumdioxid, in einem Anteil an der den heterogenen Härtungskatalysator beinhaltenden Komponente (z.B. Komponente B) vorzugsweise von 0,5 bis 15 Gew.-%, insbesondere von 1 bis 6 Gew.-%, oder einen Weichmacher, wie Triacetin, vorzugsweise in einem Anteil von 50 bis 99 Gew.-%, insbesondere von 85 bis 96 Gew.-% bezogen auf die einen heterogenen Härtungskatalysator beinhaltende Komponente (z.B. Komponente B) vorzugsweise zwei oder mehr dieser Zusätze, insbesondere alle. Beispiele für entsprechende Zusätze finden sich z.B. in EP 3 071 638 B1.

Vorzugsweise sind die Komponenten wie in EP 3 071 638 B1 definiert, insbesondere im Wesentlichen wie in den dortigen Beispielen 1 und 2. Dieses Patent wird hier durch Bezugnahmen aufgenommen oder kann als Referenz für geeignete Zusammensetzungen dienen, insbesondere wie dort in den Ansprüchen erwähnt.

Vorzugsweise sind die Komponenten frei von als solchem zugesetztem (freiem) Wasser.

Vorzugsweise enthalten die erfindungsgemäßen und erfindungsgemäß verwendeten Klebstoffsysteme keine Polymerisationsakzeleratoren in Form organischer Verbindungen, die eine Gruppe 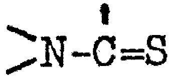 oder 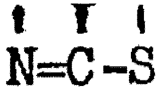 enthalten, wie in DE 22 61 261 genannt.

Die Komponenten für ein geeignetes Klebstoffsystem können vorzugsweise von der Firma Afinitica Technologies, S.L., Bellaterra, Barcelona, Spanien, unter dem Handelsnamen "Super Flex" "Adhesive Welding Ultra" kommerziell erhalten werden.

Die Komponenten liegen in dem erfindungsgemäßen Klebstoffsystem bei Raumtemperatur in strukturviskos-pastöser bis flüssiger Form vor, um einerseits ein gutes Durchmischen zu gewährleisten und andererseits ein Abtropfen beim Auftragen des gemischten Klebstoffs zu verhindern.

Die Komponenten (insbesondere zwei Komponenten A und B wie oben genannt in einem zweikomponentigen erfindungsgemäßen Klebstoffsystem) sind vorzugsweise in einem Volumenverhältnis von A : B = 10 : 1 bis 1 : 1, vorzugsweise von 5 : 1 bis 3 :1, wie 4 : 1, im Folienbeutel enthalten.

Auch einkomponentige Cyanacrylat-Klebezusammensetzungen, welche Cyanacrylate wie oben beschrieben beinhalten, jedoch keine separate Härterkomponente, so dass die Aushärtung dann durch Hydroxylionen aus Wasser aus der Luft oder auf den Oberflächen zu verklebender Materialien oder andere nukleophile Spezies wie oben erwähnt initiiert werden.

Das E-Modul des ausgehärteten Klebstoffs liegt in allen Ausführungsformen der Erfindung bevorzugt bei 0,5 bis 500 MPa, bei einer gleichzeitigen Bruchdehnung von 0 bis 500 %, insbesondere liegt das E-Modul bei 5 bis 250 MPa, bei einer gleichzeitigen Bruchdehnung von 5 bis 400 %, besonders bevorzugt weist der Klebstoff ein E-Modul von 10 bis 100 MPa auf, bei einer Bruchdehnung von 0 (oder insbesondere 20) bis 300 % und ganz besonders bevorzug ein E-Modul von 15 bis 50 MPa bei einer Bruchdehnung von 0 bis 250 %. Die Zugfestigkeit des ausgehärteten Klebstoffs liegt bevorzugt bei 0,1 bis 30 MPa, insbesondere bei 0,5 bis 20 MPa und besonders bevorzugt bei 1 bis 5 MPa.

Die vor- und nachstehende mechanische Charakterisierung erfolgt nach DIN ISO 527 (Prüfkörper Typ 1BA) nach 24 h Aushärtezeit bei einer Temperatur von 23 °C mit einer Universalprüfmaschine Z010 von Zwick GmbH & Co. KG (BT1-FR010TH.A50).

Wo Gewichtsangaben in Prozent (Gew.-%) gemacht werden, beziehen sich diese, wenn nichts anderes gesagt ist, auf die Gesamtmasse (Cyanoacrylatkomponente + Härterkomponente) der Reaktanden und Zusätze aller (im fertig formulierten Zustand flüssigen oder pastösen) Komponenten des Klebstoff-Systems, also ohne Verpackung, d.h. die Masse des oder der gesamten zugehörigen Komponentenbestandteile.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet. In besonderen Ausführungsformen der Erfindungsgegenstände kann anstelle von "beinhalten" oder "umfassen" "bestehend aus" eingesetzt werden.

Endverbraucher sind in erster Linie Personen ohne besondere Fachkenntnisse im Befestigungs- oder Reparaturbereich, d.h. Normalverbraucher.

Wo das Attribut "ferner" erwähnt wird, bedeutet dies, dass Merkmale ohne dieses Attribut stärker bevorzugt sind.

Die erfindungsgemäßen Klebstoffsysteme führen beim Aushärten im Rahmen der Anwendung zu haftungsvermittelnden Polymeren.

Neben den genannten Bestandteilen kann ein erfindungsgemäßes bzw. erfindungsgemäß zu verwendendes Klebstoffsystem in ein oder mehreren der Komponenten auch weitere übliche Bestandteile/Inhaltsstoffe beinhalten.

Wichtige Beispiele für optionale mögliche weitere Inhaltsstoffe (Bestandteile oder Zusätze) für eine oder mehrere der Komponenten sind neben den bereits genannten noch Füllstoffe und sonstige Additive.

Als Füllstoffe können übliche Füllstoffe, insbesondere Zemente (z.B. Portlandzemente oder Tonerdeschmelzzemente), Kreiden, Sand, Quarzsand, Aluminiumsilikate, Quarzmehl oder dergleichen, die als Pulver, in körniger Form oder in Form von Formkörpern zugesetzt sein können, Verwendung finden, oder andere, wie beispielsweise in WO 02/079341 und WO 02/079293 genannt (die hier diesbezüglich durch Bezugnahme aufgenommen werden), oder Gemische davon, wobei die Füllstoffe ferner oder insbesondere auch silanisiert sein können. Die Füllstoffe können in einer oder in mehreren Komponenten eines erfindungsgemäßen Klebstoffsystems, beispielsweise einer oder beiden Komponenten eines entsprechenden Zweikomponentenkits, vorhanden sein. Zusätzlich oder alternativ können hydraulisch härtbare Füllstoffe, wie Gips (z.B. Anhydrit), Branntkalk oder Zement (z.B. Tonerde- oder Portlandzement), Wassergläser oder aktive Aluminiumhydroxide, oder zwei oder mehr davon, als Füllstoff zugesetzt werden. Die Füllstoffe können in beliebigen Formen vorliegen, beispielsweise als Pulver oder Mehl, oder als Formkörper, z.B. in Zylinder-, Ring-, Kugel-, Hohlkugel-, Plättchen-, Stäbchen-, Sattel- oder Kristallform, oder ferner in Faserform, und die entsprechenden Grundteilchen haben vorzugsweise einen maximalen Durchmesser von 0,0001 bis 10 mm. Der Anteil an Füllstoffen beträgt vorzugsweise 0 bis 90 Gew.-%, beispielsweise 10 bis 50 Gew.-%.

Auch weitere Additive (Zusätze) können zugesetzt sein, wie nicht reaktive Verdünnungsmittel (z.B. Lösungsmittel, wie Niederalkylketone, z.B. Aceton, Diniederalkyl-niederalkanoylamide, wie Dimethylacetamid, Niederalkylbenzole, wie Xylole oder Toluol, oder Paraffine, oder Wasser), Flexibilisatoren, Stabilisatoren, Netzmittel, Pigmente oder Farbstoffe, oder Gemische von zwei oder mehr dieser Additive, oder dergleichen. Derartige weitere Zusätze können vorzugsweise insgesamt in Gewichtsanteilen von insgesamt 0 bis 20 %, beispielsweise von 0 bis 5 Gew.-%, zugesetzt sein.

Als Material für einen erfindungsgemäßen bzw. erfindungsgemäß verwendbaren Folienbeutel können Kunststoffe Verwendung finden, wie kompostierbare Kunststoffe, z.B. auf Basis von Stärke, Polyester, Polyesteramide, Polyurethane, Polivinylalkohole, Cellulose, Lignocellulose, Polymilchsäure, Polyhydroxyalkanoate, oder Mischungen von zwei oder mehr derartigen Materialien. Bevorzugt sind wasser-, feuchtigkeits- und wasserdampfdichte Materialien, insbesondere solche, die (z.B. durch Aufdampfen) metallisiert sind und/oder Verbundfolien aus einer Kunststoff- und einer Metall-, insbesondere Aluminium-Folie sind.

Spezifische Ausführungsformen der Erfindung betreffen auch die in den Ansprüchen und der Zusammenfassung aufgeführten Varianten - die Ansprüche und die Zusammenfassung werden hier daher durch Bezugnahme aufgenommen.

Es zeigt:

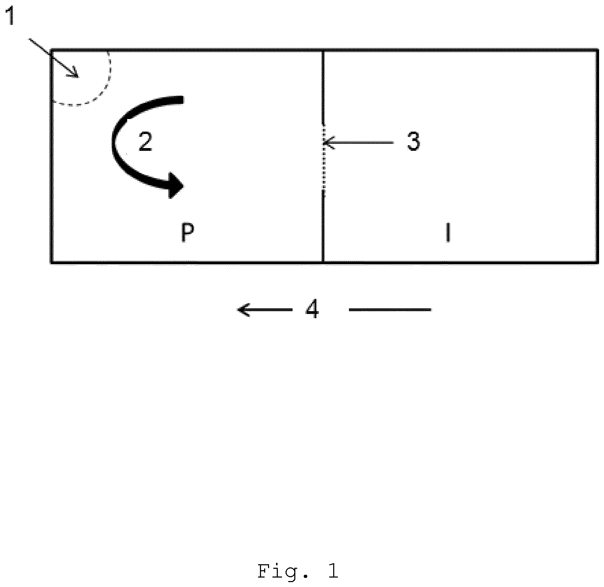

Figur 1 (Fig. 1): Schematische Darstellung eines erfindungsgemäßen Folienbeutels.

Die nachfolgenden Beispiele dienen der Illustration der Erfindung, ohne ihren Umfang einzuschränken:

### Beispiel 1: Klebstoffystem aus Folienbeutel mit 2-komponentigem Cyanacrylatklebstoff und dessen Anwendung

Als Klebstoff wurden die Komponenten eines Zwei-Komponenten-Klebstoffs mit dem Handelsnamen Afinitica® Super Flex der Firma Afinitica Technologies, S.L., Bellaterra, Barcelona, Spanien verwendet.

Die beiden Komponenten wurden in einem Folienbeutel (100 mm x 48 mm x 2 bis 5 mm) mit zwei Kammern voneinander getrennt in die beiden Kammern abgefüllt. Der Folienbeutel besteht aus einer Verbundfolie und besitzt ein 2-Kammersystem. Ein Beispiel für einen solchen Folienbeutel wird in Fig. 1 gezeigt. Die zwei Kammern (**P** für Härterkomponente, I für Cyanoacrylatkomponente) sind durch eine innere Sollbruchstelle **3** (z.B. ausgeführt in Form einer lösbar verschweißten oder verklebten Peelbaren Siegelnaht zwischen den Kompartimenten für die Komponenten als durch Druck auf den Folienbeutel, z.B. durch dessen manuelles Aufrollen, durchströmbarer Verschlussbereich) voneinander getrennt. Durch Aufrollen des Beutels (in Fig. 1 in Rollrichtung 4) wird die innere Sollbruchstelle **3** geöffnet und beide Komponenten werden dann durch Kneten (Walken) von Hand im Mischbereich 2 miteinander in Kontakt gebracht und gemischt. Durch Öffnen an einer vorgesehenen Stelle zur Öffnung **1** (Aufreißen dieser Stelle) gelangt die Mischung nach außen und wird auf mindestens eine der zu verklebenden Oberflächen aufgetragen, wobei der Folienbeutel zur gleichmäßigen Verteilung verwendet wird.Die Oberflächen werden zum Verkleben/Festkleben miteinander in Kontakt gebracht.

Zur Bestimmung der Endfestigkeit wird wie folgt vorgegangen:
Die Endfestigkeit nach 24 h kann mit Hilfe der Zugscherfestigkeit nach DIN EN ISO 4587 bestimmt werden. Dazu werden sandgestrahlte Stahlprüfkörper (100 x 25 x 2 mm) verklebt (Klebefläche 13 x 25 mm) und nach 24 h Aushärtezeit bei einer Temperatur von 23 °C mit einer Universalprüfmaschine Z010 von Zwick GmbH & Co. KG (BT1-FR010TH.A50) getestet. Die übrigen Parameter werden wie oben beschrieben ermittelt. Die Ergebnisse lauten:

**Mechanische Werte nach 24 h Aushärtezeit**

| | | |
|---|---|---|
| Zugscherfestigkeit (St/St) | [MPa] | 3, 6 |
| Zugscherfestigkeit (ABS/ABS) | [MPa] | 4,5 |
| Zugscherfestigkeit (PC/PC) | [MPa] | 2,3 |
| Zugfestigkeit | [MPa] | 1,2 |
| E-Modul | [MPa] | 22,3 |
| Bruchdehnung | [%] | 210 |

Zur Ermittlung der Anfangshaftung kann eine zweifach gelochte Adapterplatte aus Stahl (Abmessung: 3,5 cm x 2,0 cm, 25,5 g) mit der entsprechenden Rezeptur bestrichen und auf eine lasierte, entfettete Fliese geklebt werden. Haftet die Adapterplatte ohne zusätzliche Fixierung an der senkrechten gestellten Fliese, wird diese mit einer guten Anfangshaftung bewertet. Findet ein Abrutschen der Adapterplatte statt, wird die Anfangshaftung als schlecht bewertet.

### Beispiel 2: Einkomponentiges Klebstoffsystem und dessen Verwendung

Der einkomponentige Klebstoff wird die Cyanacrylatkomponente von "Superflex" der Firma Afinitica Technologies, S.L., Bellaterra, Barcelona, Spanien, in einen einkammerigen Folienbeutel abgefüllt und dieser verschlossen.

Bei der Anwendung wird der Beutel (vorzugsweise an einer Sollbruchstelle) geöffnet und der Klebstoff von Hand ausgedrückt und mit dem Folienbeutel auf mindestens eine der zu verklebenden Oberflächen aufgetragen und die zu verklebenden Oberflächen gegeneinander gepresst.

## Patentansprüche

1. Mehr-, insbesondere zweikomponentiges, Klebstoffsystem für Befestigungszwecke und/oder für Reparaturzwecke, zum Festkleben oder Verkleben von Gegenständen, welches in Form eines Kits als Folienbeutel mit mehreren, insbesondere zwei, Kammern in Form von zwei oder mehr im Folienbeutel vorhandenen folienumhüllten Kammern, welche jeweils eine reaktionshindernd getrennte Aufbewahrung der sonst bei Mischung miteinander reagierenden Komponenten, von denen mindestens eine ein oder mehrere Cyanacrylate beinhaltet, mindestens eine andere einen heterogenen Härtungsinitiator beinhaltet, gewährleisten, wobei der Folienbeutel die folienumhüllten Kammern ausformt und wobei der Inhalt von zwei oder mehr miteinander zu einem Folienbeutel verbundenen folienumhüllten Kammern durch Zerstörung einer im Folienbeutel vorhandenen inneren Sollbruchstelle zwischen den folienumhüllten Kammern unter Vereinigung der Innenräume der folienumhüllten Kammern miteinander im Anwendungsfall innerhalb des die folienumhüllten Kammern bildenden Folienbeutels gemischt werden kann bzw. im Anwendungsfall gemischt wird.

2. Klebstoffsystem nach Anspruch 1, wobei es sich um ein zweikomponentiges System mit einer ein oder mehrere Cyanacrylate beinhaltenden Komponente A und einer einen heterogenen Härtungskatalysator beinhaltenden Komponente B handelt.

3. Klebstoffsystem nach einem der Ansprüche 1 oder 2, welches zum Gebrauch durch den Endverbraucher vorgesehen ist.

4. Klebstoffsystem nach einem der Ansprüche 1 bis 3, **dadurch gekennzeichnet, dass** als Cyanacrylat ein solches der Formel I 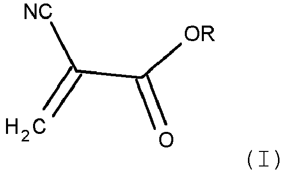 worin R ausgewählt ist aus der Gruppe bestehen aus einer linearen oder verzweigten C₁-C₁₆-Alkylgruppen, C₂-C₁₆-Alkoxyalkyl, C₃-C₁₆-Cyloalkyl, C₇-C₁₆-Aralkyl, C₆-C₁₆-Aryl, C₃-C₁₆-Allyl und C₁-C₁₆-Halogenalkyl, beinhaltet ist.

5. Klebstoffsystem nach einem der Ansprüche 1 bis 3, **dadurch gekennzeichnet, dass** als Cyanoacrylat Ethylcyanoacrylat beinhaltet ist.

6. Klebstoffsystem nach einem der Ansprüche 1 bis 5, **dadurch gekennzeichnet, dass** als heterogener Härtungskatalysator Xonotlit beinhaltet ist.

7. Klebstoffsystem nach einem der Ansprüche 1 bis 6, **dadurch gekennzeichnet, dass** es einen anionischen Initiator in Form einer heterocyclischen Verbindung mit zwei kondensierten Ringen beinhaltet.

8. Klebstoffsystem nach einem der Ansprüche 1 bis 7, **dadurch gekennzeichnet, dass** die innere Sollbruchstelle als erst durch Druck auf den Folienbeutel, z.B. durch dessen manuelles Aufrollen, durchströmbarer Verschlussbereich ausgebildet ist.

9. Einkomponentiges Klebstoffsystem mit einem Cyanacrylatkleber in einem Einkammer-Folienbeutel.

10. Verwendung eines Klebstoffsystems nach einem der Ansprüche 1 bis 9 für Befestigungszwecke und/oder für Reparaturzwecke im Endverbraucherbereich zum Festkleben oder Verkleben von Gegenständen.

11. Verwendung nach Anspruch 10, wobei der Folienbeutel zum Verteilen eines darin enthaltenen Klebstoffs verwendet wird.

12. Verwendung eines Klebstoffsystems nach einem der Ansprüche 1 bis 8, **dadurch gekennzeichnet**, wobei die Komponenten des zwei- oder mehrkomponentigen Klebstoffsystems durch Öffnen der inneren Sollbruchstelle des Folienbeutels, insbesondere durch Drücken auf den Folienbeutel und/oder Aufrollen des Folienbeutels und Walken, miteinander in Kontakt gebracht und unter Drücken des Folienbeutels miteinander vermischt und anschließend durch Öffnen eines zu öffnenden Bereiches des Folienbeutels nach außen geleitet und so in oder vorzugsweise auf mindestens eines von zwei zu verklebenden Materialien aufgebracht wird.
